(19) **Europäisches Patentamt**

**European Patent Office**

**Office européen des brevets**

(11) Veröffentlichungsnummer: **0 284 786 B1**

(12) **EUROPÄISCHE PATENTSCHRIFT**

(45) Veröffentlichungstag der Patentschrift: **06.05.92**

(51) Int. Cl.⁵: **A22C 9/00, A22C 5/00**

(21) Anmeldenummer: **88102955.7**

(22) Anmeldetag: **27.02.88**

(54) Vorrichtung zum Poltern oder zum Massieren von Fleisch.

(30) Priorität: **01.04.87 DE 3710857**

(43) Veröffentlichungstag der Anmeldung:
**05.10.88 Patentblatt 88/40**

(45) Bekanntmachung des Hinweises auf die
Patenterteilung:
**06.05.92 Patentblatt 92/19**

(84) Benannte Vertragsstaaten:
**AT BE CH DE FR GB IT LI NL**

(56) Entgegenhaltungen:
**EP-A- 0 037 350       EP-A- 0 041 744
CA-A- 1 153 928       DE-C- 2 818 862
FR-A- 1 572 357       FR-A- 1 602 311
FR-A- 2 163 964       FR-A- 2 257 235
FR-A- 2 428 982       FR-A- 2 450 563
FR-A- 2 522 934       FR-A- 2 530 419**

(73) Patentinhaber: **Ludwig Scheid GmbH & Co.
Zusatzstoffe und Gewürze für die Fleischverarbeitung
Clasenweg 6
W-6636 Überherrn(DE)**

(72) Erfinder: **Der Erfinder hat auf seine Nennung
verzichtet**

(74) Vertreter: **Bernhardt, Winfrid, Dr.-Ing.
Kobenhüttenweg 43
W-6600 Saarbrücken(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.08/2.18/2.0)

**Beschreibung**

Die Erfindung betrifft eine Vorrichtung zum Poltern von Fleisch mit einer geschlossenen Drehtrommel, deren Trommelraum von einer gekühlten Trommelwand her gekühlt ist.

Ferner betrifft die Erfindung eine Vorrichtung zum Massieren von Fleisch mit einem feststehenden Gefäß, das ein Rührwerk aufweist und dessen Gefäßraum von einer gekühlten Gefäßwand her gekühlt ist.

Bei der "Poltern" oder meist "Tumblen" genannten Fleischbearbeitung in einer Drehtrommel als Gefäß muß das Fleisch gekühlt werden. Auch das "Massieren", bei dem das Fleisch in einem stehenden Gefäß mittels eines Rührwerks umgewälzt wird, findet vorzugsweise unter Kühlung des Fleisches statt.

Eine normale Polter- oder Massiervorrichtung wird dazu in einen Kühlraum gebracht. Sie nimmt dort viel Platz weg und stört auch sonst den Kühlbetrieb.

Um das zu vermeiden, ist die eingangs genannte Poltervorrichtung entwickelt worden, die eine gekühlte Trommelwand aufweist. Diese Vorrichtung ist durch Benutzung bekannt und auch in der DE-A-28 18 862, vorletzter Absatz, kurz erwähnt.

Die Vorrichtung ist jedoch aufwendig. Auch bedeutet die Drehdurchführung für das die Trommelwand kühlende Wärmeübertragungsmittel mit ihrer Störanfälligkeit eine gewisse Gefahr. Es soll kein Wärmeübertragungsmittel mit dem Fleisch in Berührung kommen.

In der Laborarbeit kühlt man häufig, indem man den Trommelraum zwischendurch mit einem kalten Inertgas begast. Auch dies ist in der vorgenannten Literaturstelle erwähnt. Es bedeutet, da anschließend wieder evakuiert werden muß, Zeitverlust.

Die eingangs genannte Massiervorrichtung ist durch Benutzung bekannt sowie aus der DE-A-27 12 237, dort mit einer waagerechten Achse.

Aus der FR-A-24 28 982 ist eine Vorrichtung zur Formgebung insbesondere von Hackfleischerzeugnissen bekannt. Sie umfaßt in einem Gehäuse einen Aufgabetrichter, einen Fleischwolf, eine zu einem weiteren Fleischwolf führende Förderschnecke, eine Formgebungseinrichtung und ein Austragsband. An der Förderschnecke wird gekühlt, und zwar entweder durch Aufblasen kalter Luft auf das Fleisch entlang des Transportweges oder durch gekühlte Abschnitte der Transportschnecke, die das Fleisch berührt. Auf die letztere Weise sollen z.B. mittels flüssigem Stickstoff oder Kohlendioxid Temperaturen von -3 bis -8°C erzeugt werden.

Der Erfindung liegt die Aufgabe zugrunde, das Fleisch in einer Polter- oder Massiervorrichtung in einfacher und sicherer Weise zu kühlen.

Gemäß der Erfindung erfüllt diesen Zweck eine Vorrichtung zum Poltern der eingangs bezeichneten Art, bei der die Drehtrommel in einem ihr zugeordneten feststehenden Kühlgehäuse angeordnet ist, das ein Kühlelement aufweist, welches an ein außerhalb des Kühlgehäuses angeordnetes Kühlaggregat angeschlossen ist,
wie auch eine
Vorrichtung zum Massieren der eingangs bezeichneten Art, bei der das Gefäß in einem ihm zugeordneten, feststehenden Kühlgehäuse angeordnet ist, das ein Kühlelement aufweist, welches an ein außerhalb des Kühlgehäuses angeordnetes Kühlaggregat angeschlossen ist.

Das eigens für die Drehtrommel bzw. für das Gefäß geschaffene und ihm entsprechend angepaßte Kühlgehäuse braucht nicht viel größer als die Drehtrommel bzw. das Gefäß zu sein.
Die übrigen Bestandteile der Vorrichtung wird man außerhalb des Kühlgehäuses anordnen. Die Wärmeentwicklung des elektrischen Antriebsmotors, des Getriebes, der regelmäßig vorhandenen Vakuumpumpe usw. belasten dann die Kühlung nicht.

Nach einer vorteilhaften Ausgestaltung der Erfindung ist bei der Poltervorrichtung die Drehtrommel fliegend gelagert und mit einer ihrer Welle gegenüberliegenden Verschlußklappe versehen, vor der eine Tür des Kühlgehäuses angeordnet ist.
So ist die Drehtrommel trotz ihrer Einhausung ohne weiteres zugänglich.
Entsprechendes gilt für die Massiervorrichtung. Bei stehender Anordnung des Gefäßes mit einem von unten durch den Gefäßboden hindurch angetriebenen Rührwerk soll das Kühlgehäuse über dem Gefäß eine Klappe aufweisen.

Die Tür bzw. die Klappe kann ein Sichtfenster aufweisen, so daß man einen Blick auf die Drehtrommel bzw. das Massiergefäß hat.

Die Zeichnung gibt ein Ausführungsbeispiel der Erfindung wieder.

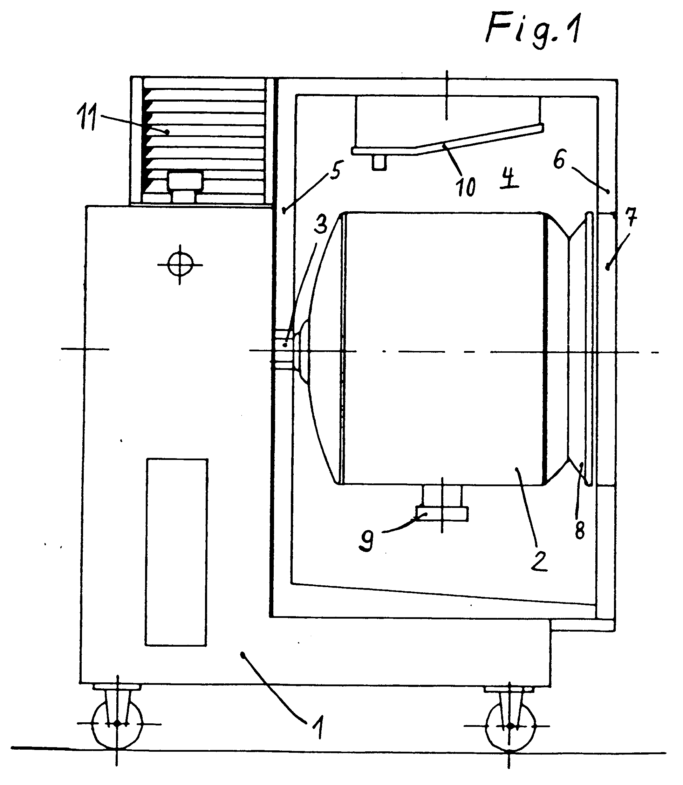

Fig. 1  zeigt eine Vorrichtung zum Poltern von Fleisch in einem senkrechten Axialschnitt,

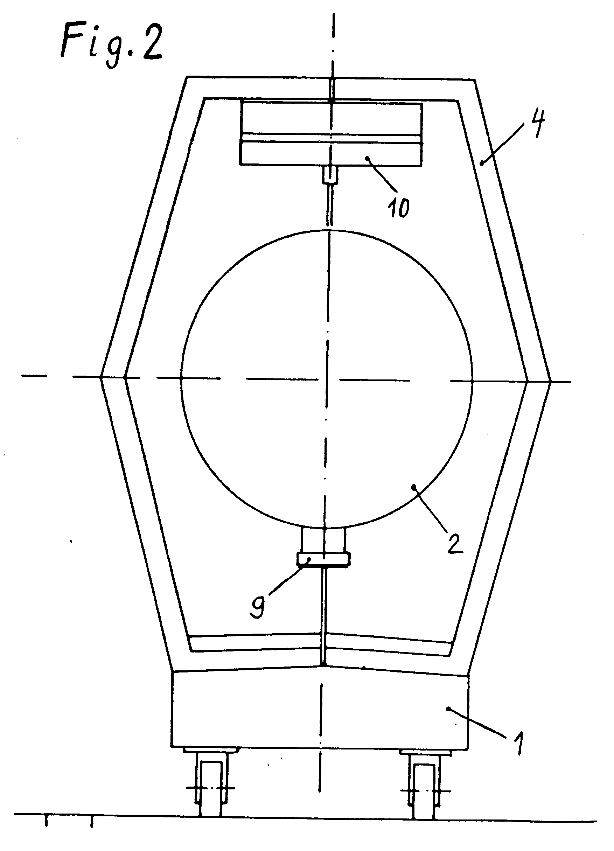

Fig. 2  zeigt die Vorrichtung in einem senkrechten Querschnitt und

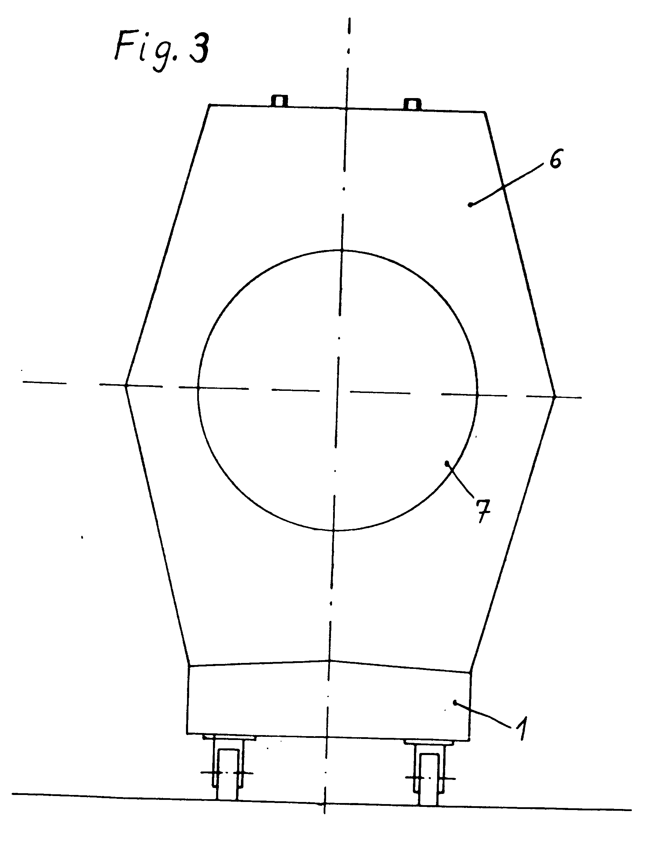

Fig. 3  zeigt die Vorrichtung in Ansicht gemäß Fig. 1 von rechts.

Auf einem fahrbaren Vorrichtungsrahmen 1 ist eine Drehtrommel 2 mit einer Welle 3 fliegend gelagert. Die Lagerung und der Antrieb der Drehtrommel sind in der Zeichnung verdeckt. Sie sind von an sich bekannter Art.

Gleichfalls bekannt und nicht gezeichnet ist eine durch eine Längsbohrung in der Welle 3 mit dem Inneren der Drehtrommel verbundene Vakuumpumpe.

Die Drehtrommel 2 ist von einem Kühlgehäuse 4 umschlossen. Es hat die Form eines liegenden Prismas von länglich-sechseckigem Querschnitt mit einer von der Welle 3 durchsetzten Rückwand 5 und einer zu dieser parallelen Vorderwand 6, die als Tür zu öffnen und mit einem Sichtfenster 7 versehen ist.

Die Drehtrommel 2 weist an ihrer der Welle 3 gegenüberliegenden Seite eine Verschlußklappe auf. Diese wird in der Zeichnung verdeckt durch einen über sie vorragenden, am Rand der Drehtrommel angeformten Kragen 8. Ein Stutzen 9 am Trommelmantel bildet einen Flüssigkeitsauslauf.

Über die Drehtrommel 2 an der Decke des Kühlgehäuses 4 angeordnete Kühlelemente 10 sind mit einem auf dem Vorrichtungsrahmen 1 angeordneten Kühlaggregat 11 verbunden.

## Patentansprüche

1. Vorrichtung zum Poltern von Fleisch mit einer geschlossenen Drehtrommel (2), deren Trommelraum von einer gekühlten Trommelwand her gekühlt ist,
   dadurch gekennzeichnet,
   daß die Drehtrommel (2) in einem ihr zugeordneten feststehenden Kühlgehäuse (4) angeordnet ist, das ein Kühlelement (10) aufweist, welches an ein außerhalb des Kühlgehäuses (4) angeordnetes Kühlaggregat (11) angeschlossen ist.

2. Vorrichtung zum Massieren von Fleisch mit einem feststehenden Gefäß, das ein Rührwerk aufweist und dessen Gefäßraum von einer gekühlten Gefäßwand her gekühlt ist,
   dadurch gekennzeichnet,
   daß das Gefäß in einem ihm zugeordneten, feststehenden Kühlgehäuse (4) angeordnet ist, das ein Kühlelement aufweist, welches an ein außerhalb des Kühlgehäuses angeordnetes Kühlaggregat angeschlossen ist.

3. Vorrichtung nach Anspruch 1 oder 2,
   dadurch gekennzeichnet,
   daß die übrigen Bestandteile der Vorrichtung gleichfalls außerhalb des Kühlgehäuses (4) angeordnet sind.

4. Vorrichtung nach Anspruch 1,
   dadurch gekennzeichnet,
   daß die Drehtrommel (2) fliegend gelagert ist und eine ihrer Welle (3) gegenüberliegende Verschlußklappe aufweist, vor der eine Tür (6) des Kühlgehäuses (4) angeordnet ist.

5. Vorrichtung nach Anspruch 2, mit einem von unten durch den Gefäßboden hindurch angetriebenen Rührwerk,
   dadurch gekennzeichnet,
   daß das Kühlgehäuse über dem Gefäß eine Klappe aufweist.

6. Vorrichtung nach Anspruch 4 oder 5,
   dadurch gekennzeichnet,
   daß die Tür (6) bzw. die Klappe ein Sichtfenster (7) aufweist.

## Claims

1. Device for tumbling meat in a closed revolving drum (2), the inside of the drum being cooled by means of refrigerating the drum walls,
   characterised in that
   the revolving drum (2) is placed in a specific fixed refrigeration container (4) which contains a cooling cell (10) which is in turn connected to a refrigerating unit (11) placed outside the refrigeration container (4).

2. Device for massaging meat with a fixed vessel which contains a stirring mechanism the body of which vessel is cooled by means of refrigerated walls,
   characterised in that
   the vessel is placed in a special fixed refrigeration container (4) which contains a cooling cell which is in turn connected to a refrigeration unit placed outside the refrigeration container.

3. Device according to claim 1 or 2,
   characterised in that
   all further parts of the device are also placed outside the refrigeration container (4)

4. Device according to claim 1,
   characterised in that
   the revolving drum (2) has a shaft and bearing only on one side and contains a closure flap on the other side in front of which a door (6) of the refrigeration container (4) is located.

5. Device according to claim 2, with a stirring system driven through the floor of the vessel,
   characterised in that
   the refrigeration container has a flap fitted over the vessel.

**6.** Device according to claim 4 or 5,
characterised in that
the door (6) or the flap, respectively, is fitted
with a oberservation window (7).

**Revendications**

**1.** Installation pour le barattage de la viande à l'aide d'un tambour fermé tournant (2) , dont l'espace intérieur est refroidi par la paroi refroidie,
caractérisée en ce que le tambour tournant (2) est placé dans une boîte réfrigérée (4) ne bougeant pas et qui lui est propre, qui présente un élément réfrigérant (10) qui est relié à un agrégat de réfrigération (11) situé en dehors de la boîte réfrigérée.

**2.** Installation pour le massage de la viande à l'aide d'une cuve fixe, qui présente un malaxeur et dont le volume intérieur est refroidi par une paroi refroidie,
caractérisée en ce que la cuve est placée dans une boîte réfrigérée (4) ne bougeant pas et qui lui est propre, qui présente un élément réfrigérant qui est relié à un agrégat de réfrigération situé en dehors de la boîte réfrigérée (4).

**3.** Dispositif suivant revendication 1 ou 2,
caractérisé en ce que les autres éléments du dispositif sont également placés en dehors de la boîte réfrigérée.

**4.** Dispositif suivant revendication 1,
caractérisé en ce que le tambour tournant (2) a une axe et palier seulement de l'un côté et comporte un couvercle de l'autre côté devant lequel une porte (6) de la boîte de réfrigération (4) se trouve placée.

**5.** Dispositif suivant revendication 2
avec un malaxeur actionné d'en bas à travers le fond de la cuve,
caractérisé en ce que la boîte réfrigérée comporte un couvercle au dessus de la cuve.

**6.** Dispositif suivant revendication 4 et 5,
caractérisé en ce que la porte (6) ou le couvercle comporte une fenêtre (7)

Fig.1

# Fig.2

Fig. 3